# EUROPÄISCHE PATENTSCHRIFT

(11) **EP 2 558 515 B1**
(45) Veröffentlichungstag und Bekanntmachung des Hinweises auf die Patenterteilung: **27.05.2015**
(21) Anmeldenummer: 11715190.2
(22) Anmeldetag: 08.04.2011
(51) Int. Cl.: C08G 64/24, C08L 69/00

(54) **POLYCARBONATZUSAMMENSETZUNGEN MIT VERBESSERTEN OPTISCHEN UND THERMISCHEN EIGENSCHAFTEN**
POLYCARBONATE COMPOSITION HAVING IMPROVED OPTICAL AND THERMAL PROPERTIES
COMPOSITIONS DE POLYCARBONATES À PROPRIÉTÉS OPTIQUES ET THERMIQUES AMÉLIORÉES

(30) Priorität: 13.04.2010 DE 102010014726
(43) Veröffentlichungstag der Anmeldung: 20.02.2013
(73) Patentinhaber: Bayer Intellectual Property GmbH, 40789 Monheim (DE)
(72) Erfinder: KÖHLER, Karl-Heinz, 52078 Aachen (DE); BRUYNSEELS, Franky, B-9170 St. Gillis-Waas (BE)
(74) Vertreter: BIP Patents
(86) Internationale Anmeldenummer: PCT/EP2011/055479
(87) Internationale Veröffentlichungsnummer: WO 2011/128254

(56) Entgegenhaltungen:
- EP-A1- 0 359 953
- EP-A2- 0 770 589
- JP-A- 2006 028 391
- US-B1- 6 673 975

## Beschreibung

Gegenstand der Erfindung ist ein Verfahren zur Herstellung von Polycarbonaten aus Dihydroxydiphenylcycloalkanen.

Polycarbonate, hergestellt aus Dihydroxydiarylcycloalkanen sind aus der EP 359 953 A bereits bekannt, insbesondere Polycarbonate aus 1,1-Bis-(4-Hydroxyphenyl)-3,3,5-Trimethylcyclohexan. Solche Polycarbonate bzw. Copolycarbonate aus 1,1-Bis-(4-Hydroxyphenyl)-3,3,5-Trimethyl-cyclohexan und anderen Bisphenolen, wie z.B. Bisphenol A, weisen hohe Wärmeformbeständigkeiten auf, und werden daher vorzugsweise dort verwendet, wo Formkörper aus diesen Polycarbonaten hohen Temperaturbelastungen ausgesetzt sind. Dabei sind insbesondere bei transparenten Formteilen z.B. bei Lichtstreuscheiben von Lampen neben der Wärmeformbeständigkeit auch ein guter Ausgangsfarbton der Formkörper und eine ausreichende Beständigkeit dieses Farbtons bei längerer Temperatureinwirkung erwünscht.

Es hat daher an Bemühungen nicht gefehlt, die optischen Eigenschaften von Polycarbonaten mit den oben genannten erfindungsgemäßen Strukturmerkmalen zu verbessern. So wird z.B. in der EP 718 354 A die Thermostabilisierung mit Hilfe von Phosphinen und in der EP 789 053 A die Thermostabilisierung mit Hilfe von Mischungen aus Phosphinen und organischen Silizium-Verbindungen als Polymeradditiven für die erfindungsgemäßen Polycarbonate beschrieben. Die EP 1 240 240 A beschreibt Verbesserungen der Polymersynthese der erfindungsgemäßen Polycarbonate durch Verwendung einer metallarmen Natronlauge bei der Herstellung nach dem Phasengrenzflächenverfahren. Doch alle diese Maßnahmen waren nicht ausreichend, um ein Polycarbonat mit den erfindungsgemäßen Strukturmerkmalen herzustellen, das den gestiegenen Anforderungen an die optische Qualität der daraus hergestellten Formkörper entspricht.

Aufgabe der Erfindung war daher die Herstellung eines Polycarbonats mit den erfindungsgemäßen Strukturmerkmalen, dessen Formkörper im spritzfrischen Zustand einen Vergilbungsgrad, gemessen durch den Yellowness-Index (Y.I.), von kleiner 2,0 aufweisen und dessen Formkörper nach einer Heißluft-Alterung bei 150°C über einen Zeitraum von 250 Stunden einen Y.I. von kleiner 7,0 aufweisen.

Überraschenderweise wurde nun gefunden, dass die Lösung der erfinderischen Aufgabe dadurch gelingt, dass das für die Polycarbonat-Synthese eingesetzte Dihydroxydiphenylcycloalkan, insbesondere das eingesetzte 1,1-Bis-(4-Hydroxyphenyl)-3,3,5-Trimethylcyclohexan, einen möglichst geringen Gehalt an organischen Schwefelverbindungen aufweist, vorzugsweise einen Schwefelgehalt von weniger als 1,5 ppm, besonders bevorzugt von weniger als 1,0 ppm und somit einen geringeren Gehalt an Schwefel im hergestellten Polycarbonat bewirkt. Dies ist umso überraschender, da der Stand der Technik eine Reihe von Beispielen aufweist, in denen die Anwesenheit von Schwefelverbindungen in größeren Mengen sowohl in Bisphenolen als auch in Polycarbonaten positiven Einfluss auf die Farbe des Polycarbonats hat. So werden z.B. in der JP 2005 060540 und in der JP 2006 028391 Zusätze an Sulfit zu Bisphenolen in größeren Mengen als oben genannt beschrieben, die dem daraus hergestellten Polycarbonat einen exzellenten Farbton verleihen. In der WO 2007/004434 werden Zugaben von Dithioniten zu Bisphenolen beschrieben, die sich vorteilhaft auf die Farbe des daraus hergestellten Polycarbonats auswirken. Auch die direkte Zugabe von aliphatischen Thioverbindungen zu Polycarbonaten kann deren Yellowness Index reduzieren, wie aus der US-A 4,904,717 zu entnehmen ist. Die Zugabe von schwefelhaltigen Antioxidantien zu Polycarbonaten hat ebenfalls eine positive Wirkung auf die Stabilität des Polycarbonat-Farbtons, wie in der JP 2004 217734 beschrieben ist. Auch in der JP 2008 111047 ist ein Zusammenhang zwischen Schwefelgehalt im Polycarbonat und dessen Farbton analog erkennbar. Der zitierte Stand der Technik legt eine Reduzierung des Schwefelgehaltes in Bisphenolen zur Erzielung besserer Farben der daraus hergestellten Polycarbonate in gar keiner Weise nahe. Im Gegenteil wird der Fachmann mit Hinblick auf den aus dem Stand der Technik bekannten Methoden eine Erhöhung des Schwefelgehalts im Polycarbonat für zweckgemäß halten.

Die Polycarbonate sind solche, die die Struktureinheiten der allgemeinen Formel (I): 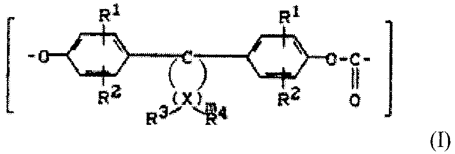 enthalten,
wobei R¹ und R² unabhängig voneinander H, Halogen, C₁-C₈-Alkyl, C₅-C₆-Cycloalkyl, C₆-C₁₀-Aryl und C₇-C₁₂-Arylalkyl, mit m gleich 4 oder 5, mit R³ und R⁴ für jedes X frei wählbar und unabhängig von einander H oder C₁-C₈-Alkyl, mit X gleich Kohlenstoff,
insbesondere Polycarbonate, die die Struktureinheiten der allgemeinen Formel (II) 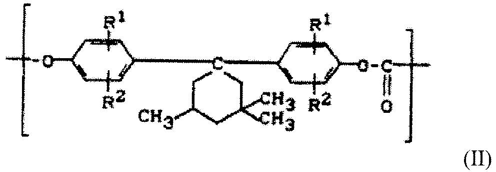 enthalten,
wobei R¹ und R² die für Formel (I) angegebene Bedeutung haben, dadurch gekennzeichnet, dass die reine Polycarbonatzusammensetzung einen Schwefelgehalt von weniger als 2,0 ppm, vorzugsweise von weniger als 1,5 ppm aufweist, wobei der Schwefelgehalt z.B durch eine Chemilumineszenz-Methode oder durch die ICP-MS-Methode (inductively-coupled-plasma mass-spectrometry oder Massenspektrometrie mit induktiv gekoppeltem Plasma) bestimmt werden kann. Diese Methoden sind dem Fachmann bekannt und in der Literatur hinreichend beschrieben. Bevorzugt weisen deren Formkörper im spritzfrischen Zustand einen Vergilbungsgrad, gemessen durch den Yellowness-Index (Y.I.) von kleiner 2,0, vorzugsweise von kleiner 1,8, und deren Formkörper nach einer Heißluft-Alterung bei 150°C über einen Zeitraum von 250 Stunden einen Y.I. von kleiner 7,0 auf. Diese verbesserten optischen und thermischen Eigenschaften stehen in einem direkten Zusammenhang mit dem Schwefelgehalt der eingesetzten Dihydroxydiphenylcycloalkane der allgemeinen Formel (Ia): 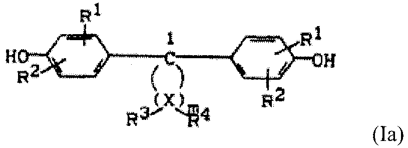
wobei R¹, R², R³, R⁴, X und m die für Formel (I) angegebene Bedeutung haben, insbesondere der eingesetzten 1,1-Bis-(4-Hydroxaryl)-3,3,5-Trimethylcyclohexane der allgemeinen Formel (IIa): 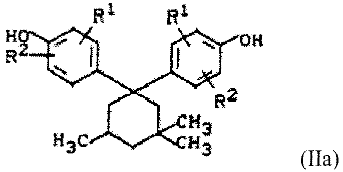
wobei R¹ und R² die für Formel (I) angegebene Bedeutung haben.

Der Schwefel-Gehalt der für die Herstellung der erfindungsgemäßen Polycarbonate eingesetzten Bisphenole der Formeln (Ia) und (IIa) sollte unter 1,5 ppm liegen, vorzugsweise unter 1,0 ppm. Höhere Schwefelgehalte in den Bisphenolen haben eine zunehmend nachteilige Auswirkung auf den Gelbwert bzw. die Vergilbungstendenz der spritzfrischen transparenten Formkörper der so hergestellten Polycarbonate. Der Schwefelgehalt der eingesetzten Bisphenole wird bestimmt durch Elementaranalyse und bezieht sich auf "S" (MM 32 g/mol). Der Schwefelgehalt bezieht sich sowohl auf anorganische als auch auf organische Schwefelverbindungen, überwiegend aber auf organische Schwefelverbindungen, die als störende Nebenkomponenten im Bisphenol enthalten sein können. Solche Schwefelverbindungen können entweder inhärent im Bisphenol vorhanden sein, wie z.B. durch die Synthese mit Hilfe von Schwefel-haltigen Cokatalysatoren, oder sie können als Stabilisatoren dem Bisphenol zugesetzt sein, wie z.B. Natrium-Dithionit. Die inhärent in den Bisphenolen vorhanden organischen Schwefelverbindungen, die bei deren Synthese z.B. als Cokatalysatoren oder als sonstige Fremdsubstanzen in diese Bisphenole eingetragen werden, können erfindungsgemäß durch literaturbekannte Verfahren z.B. durch Wäschen mit geeigneten Säuren oder Laugen bei der Aufarbeitung der Bisphenole großenteils eliminiert werden.

Die Polycarbonate können Homopolymere mit ein und derselben wiederkehrenden Struktureinheit nach Formel (I) oder Copolymere mit wiederkehrenden Struktureinheiten nach Formel (I) und mit einer oder mehreren anderen Struktureinheiten der allgemeinen Formel (III) sein: 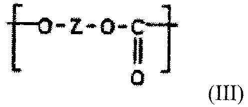 wobei Z für einen aromatischen oder alkylaromatischen Rest steht.

Homopolymere sind vorzugsweise solche aus Bisphenolen der allgemeinen Formel (IIa), insbesondere solche aus 1,1-Bis-(4-Hydroxyphenyl)-3,3,5-Trimethylcyclohexan (BPTMC). Erfindungsgemäße Copolycarbonate sind vorzugsweise solche aus BPTMC und Bisphenol A. Der molare Anteil von BPTMC an der Gesamtzahl der Mole an eingesetzten Bisphenolen kann in den erfindungsgemäßen Polycarbonaten in relativ weiten Grenzen von 0 bis 100 Mol% BPTMC variieren, vorzugsweise aber von 2 bis 90 Mol% BPTMC, besonders bevorzugt von 10 bis 80 Mol% BPTMC und ganz besonders bevorzugt von 30 bis 70 Mol% BPTMC.

Die Polycarbonate werden aus zu diesem Zweck erzeugten schwefelarmen Bisphenolen hergestellt. Bei den Copolycarbonaten gelten auch für die anderen mit verwendeten Bisphenole, die in der Struktureinheit mit der allgemeinen Formel (III) enthalten sind, die gleichen Feststellungen bezüglich des Schwefelgehaltes wie oben ausgeführt. Auch diese Bisphenole sollten einen Schwefelgehalt, der durch unerwünschte Nebenkomponenten im Bisphenol bedingt ist, von kleiner 1,5 ppm und vorzugsweise kleiner 1,0 ppm aufweisen.

Die aus schwefelarmen Bisphenolen hergestellten Polycarbonate zeichnen sich gegenüber solchen Polycarbonaten, die aus Bisphenolen mit deutlich höheren Schwefelgehalten hergestellt worden sind, durch eine bessere Eigenfarbe der durch Spritzguss aus diesen Polycarbonaten hergestellten Formkörper aus. Diese Eigenfarbe der transparenten spritzfrischen Formkörper ist gekennzeichnet durch einen sehr geringen Gelbwert, der durch den sog. "Yellowness-Index" (Y.I.) nach ASTM E313 an spritzgegossenen Platten definierter Dicke bestimmt wird. Alle Angaben zum Y.I. der Polycarbonate beziehen sich auf diese Bestimmungsmethode. Die Y.I.s der Polycarbonate liegen unterhalb von 2,0, vorzugsweise unterhalb von 1,8, und auch Polycarbonat-Qualitäten mit Werten für Y.I. von 1,10 sind im Einzelfall durchaus erreichbar. Dabei kann der Gehalt an Struktureinheiten der allgemeinen Formel (I) zu Struktureinheiten der allgemeinen Formel (III) im Polycarbonat in relativ weiten Grenzen beliebig variieren. Die Polycarbonate mit einer hellen Eigenfarbe weisen darüber hinaus auch eine höhere Beständigkeit dieser verbesserten Eigenfarbe bei höherer Temperaturbelastung über längere Zeit auf, als dies bei den nicht Polycarbonaten aus Bisphenolen mit höheren Schwefelgehalten der Fall ist. Der Gelbwert nimmt zwar bei längerer Temperaturlagerung der Formkörper zu, bleibt aber noch unter Werten von 7,0 für den Y.I. bei einer Temperaturbelastung bei 150°C in einem Zeitraum 250 Stunden. Dabei werden transparente spritzgegossene Norm-Formkörper (Platten gleicher Dicke, wie zur Y.I.-Bestimmung) in einem Trockenschrank der Fa. Heraeus frei schwebend aufgehängt, 250 Stunden lang in Luft bei Normaldruck einer Temperatur von 150°C ausgesetzt und nach dem Abkühlen auf Raumtemperatur entnommen und bezüglich Y.I. so vermessen, wie oben beschrieben. Diese Standard-Testbedingungen stellen eine recht gute Annäherung an reale PraxisBedingungen dar. Daher sind die Polycarbonate bevorzugt geeignet für den Einsatz in Form von transparenten oder opaken oder hell eingefärbten Spritzguss- oder Extrusions-Formkörpern, die einer höheren, ggf. länger anhaltenden Temperaturbelastung ausgesetzt sind und die dabei ihre Eigenfarbe nicht wesentlich verändern sollen. Solche bevorzugten Anwendungen können auch Platten oder Folien sein, die nach einem Gieß-Verfahren aus der Lösung des Polycarbonats in einem geeigneten Lösemittel hergestellt werden. Die Polycarbonate lassen sich entweder thermoplastisch verarbeiten oder aus der Lösung in geeigneten Lösemitteln, wie z.B. cyclischen Ethern, verarbeiten. Sie sind vorzugsweise hochmolekular mit Molmassen Mw (Gewichtsmittel des Molekulargewichts, bestimmt durch Größenausschluss-Gelchromatographie nach vorhergehender Eichung mit PS- oder Polycarbonat-Eichsubstanzen) von 10.000 bis 300.000 g/mol, vorzugsweise von 15.000 bis 80.000 g/mol und besonders bevorzugt von 20.000 bis 40.000 g/mol.

Die Polycarbonate können durch Einbau von geeigneten mehrfunktionellen Monomeren in die Polymerkette verzweigt sein; als trifunktionelle Monomere sind z.B. 1,1,1-Tris-(p-Hydroxyphenyl)-ethan oder 1,3,5-Tris- (p-Hydroxyphenyl)-benzol als Verzweiger geeignet. Die erfindungsgemäßen Polycarbonate können gezielt eingebaute Endgruppen besitzen, durch deren Einbau das Molekulargewicht der Polycarbonate insbesondere bei deren Herstellung im Phasengrenzflächenverfahren eingestellt werden kann. Solche Endgruppen werden durch geeignete Monophenole, wie z.B. Phenol, tert.-butyl-Phenol oder Isooctylphenol in das Polycarbonat eingebaut.

Die Polycarbonate können in Lösung nach üblichen Phasengrenzflächenverfahren oder in der Schmelze nach dem Umesterungsverfahren mit Aryl- oder Alkyl-Carbonaten hergestellt werden ( s. a. H. Schnell, "Chemistry and Physics of Polycarbonates", Polymer Reviews, Vol. IX, S. 33 ff., Interscience Publishers, 1964). Das Phasengrenzflächen-Verfahren ist besonders geeignet für Homo- oder Copolycarbonate mit hohen Glastemperaturen und/oder hohen Molmassen Mw. Das Umesterungsverfahren ist geeignet für erfindungsgemäße Polycarbonate mit ausreichend hoher Schmelze-Fließfähigkeit bei höheren Molmassen.

Für das erfindungsgemäße Verfahren geeignete Diphenole zur Herstellung von Polycarbonat sind im Stand der Technik vielfach beschrieben.

Wird ein Copolycarbonat hergestellt, so werden neben der Komponente (Ia) und / oder (IIa) noch eines oder mehrere weitere Dihydroxyarylverbindungen sowie Lösemittel, Phosgen, Kettenabbrecher und Katalysatoren (im Phasengrenzflächenverfahren) oder weitere Dihydroxyarylverbindungen und Diarylcarbonate und Katalysatoren (im Schmelzeumesterungsverfahren) verwendet. Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxy-phenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxy-phenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete andere Dihydroxyarylverbindungen sind z.B. in DE-A 3 832 396, FR-A1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate bei der Schmelzeumesterung sind solche der allgemeinen Formel (II) 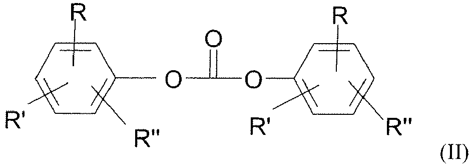 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch - COO-R'" bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenyl-ethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl) phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, D i-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Die zur Regelung des Molekulargewichtes benötigten monofunktionellen Kettenabbrecher, wie beispielsweise Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeigneten Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Als Katalysatoren können im Schmelzumesterungsverfahren zur Herstellung von Polycarbonaten die in der Literatur bekannten basischen Katalysatoren wie beispielsweise Alkali- und Erdalkalihydroxide und -oxide und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (IV) 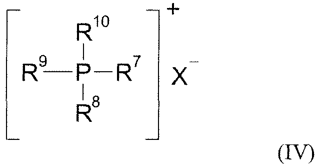 worin
- R⁷⁻¹⁰: für gleiche oder verschiedene gegebenenfalls substituierte C₁-C₁₀-Alkyl-, C₆-C₁₄-Aryl-, C₇-C₁₅-Arylalkyl- oder C₅-C₆-Cycloalkylreste, bevorzugt für Methyl oder C₆-C₁₄-Aryl, besonders bevorzugt Methyl oder Phenyl stehen und
- X⁻: für ein Anion ausgewählt aus der Gruppe Hydroxyd, Sulfat, Hydrogensulfat, Hydrogencarbonat, Carbonat, Halogenid, bevorzugt Chlorid, und Alkylat oder Arylat der Formel -OR¹¹ stehen, wobei R¹¹ für einen gegebenenfalls substituierten C₆-C₁₄-Aryl-, C₇-C₁₅-Arylalkyl- oder C₅-C₆-Cycloalkylrest, C₁-C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁-C₁₀-Alkoxide und C₆-C₁₄-Aryloxide von Lithium, Natrium und Kalium, vorzugsweise Hydroxide, gegebenenfalls substituierte C₁-C₁₀-Alkoxide oder C₆-C₁₄-Aryloxide von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens im Grenzflächenverfahren kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und / oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (< 2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein *tert.* Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und / oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicar-bonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

**C₁-C₄-Alkyl** steht im Rahmen der Erfindung beispielsweise für Methyl, Ethyl, n-Propyl, iso-Propyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Die Polycarbonate können zusätzlich übliche Additive, wie z.B. Entformungsmittel, Fließhilfsmittel, Thermostabilisatoren, UV- und/oder IR-Absorber, Flammschutzmittel, Farbstoffe und Füllstoffe, sowie andere Polymere enthalten in Mengen von 0 bis 5 Gew.-Teilen, bevorzugt 0 bis 2,5 Gew.-Teile, besonders bevorzugt 0 bis 1 Gew.-Teile (jeweils bezogen auf die Summe der Gewichtsteile der Polycarbonatkomponenten).

Den Zusammensetzungen können noch die für diese Thermoplasten üblichen Zusatzstoffe wie Füllstoffe, UV-Stabilisatoren, IR-Stabilisatoren, Thermostabilisatoren, Antistatika und Pigmente, Farbmittel in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Die den Zusammensetzungen gegebenenfalls zugesetzten Entformungsmitttel sind bevorzugt ausgewählt aus der Gruppe, die Pentaerythrittetrastearat, Glycerinmonostearat, langkettige Fettsäureester, wie beispielsweise Stearylstearat und Propoandiolstearat sowie deren Mischungen umfasst. Die Entformungsmittel werden eingesetzt in Mengen von 0,05 Gew.-% bis 2,0 Gew.-% bezogen auf die Formmasse, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Formmasse.

Geeignete Zusatzstoffe sind beispielsweise beschrieben in "Additives for Plastics Handbook, John Murphy, Elsevier, Oxford 1999", und im "Plastics Additives Handbook, Hans Zweifel, Hanser, München 2001".

Geeignete Antioxidantien bzw. Thermostabilisatoren sind beispielsweise:

Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenylessigsäure, Amide of β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Bevorzugt sind organische Phosphine (z.B. Triphenylphosphin), Phosphite, Phosphonate und Phosphate (z.B. Triisooctylphosphat, TOF), meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw substituierte Hydroxyalkoxyphenyl, 1,3,5-triazole , bevorzugt sind substituierte Benzotriazole wie z.B. 2-(2'-hydroxy-5'-methyl-phenyl)-benzotriazole, 2-(2'-hydroxy-3',5'-di-t-butyl-phenyl)-benzotriazole, 2-(2'-hydroxy-3'-tert.-butyl-5'-methyl-phenyl)-5-chlorobenzotriazole, 2-(2'-hydroxy-3',5'-tert.-butyl-phenyl)-5-chlorobenzotriazole, 2-(2'-hydroxy-5'-tert.-octylphenyl)-benzotriazole, 2-(2'-hydroxy-3',5'-di-tert.-amyl-phenyl)-benzotriazole, 2-[2'-hydroxy-3'-(3",4",5",6"-tetrahydrophthalimido-ethyl)-5'-methylphenyl]-benzotriazole and 2,2'-methylenebis [4-(1,1,3,3-tetramethylbutyl)-6-(2H-benzotriazole-2-yl)-phenol].

Als UV-Stabilisatoren sind weiterhin geeignet ausgewählt aus der Gruppe, die Benzotriazole (z. B. Tinuvine der Fa. Ciba), Triazine CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren umfaßt.

Beispiele für geeignete UV-Absorber sind:
a) Malonester der Formel (I): 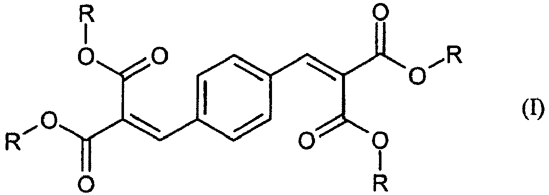 worin R Alkyl bedeutet. Bevorzugt steht R für C1-C6-Alkyl, insbesondere für C1-C4-Alkyl und besonders bevorzugt für Ethyl.
b) Benzotriazol-Derivate nach Formel (II): 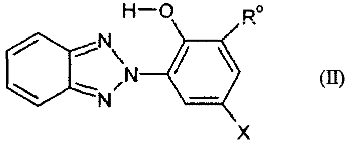
   In Formel (II) sind R° enthaltend und X gleich oder verschieden und bedeuten H oder Alkyl oder Alkylaryl.
   Bevorzugt sind dabei Tinuvin® 329 mit X = 1,1,3,3-Tetramethylbutyl und R° = H, Tinuvin® 350 mit X = tert-Butyl und R0 = 2-Butyl und Tinuvin® 234 mit X und R° = 1,1-Dimethyl-1-phenyl
c) Dimere Benzotriazol-Derivate nach Formel (III): 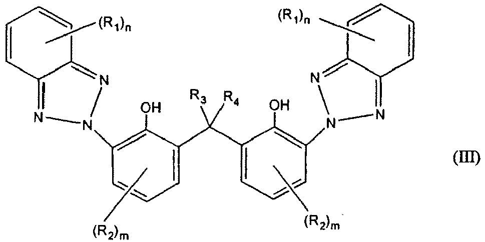
   In Formel (III) sind R1 und R2 gleich oder verschieden und bedeuten H, Halogen, C1- C10-Alkyl, C5- C10-Cycloalkyl, C7-C13 -Aralkyl, C6-C14 -Aryl, -OR5 oder -(CO)-O-R 5 mit R5 = H oder C1-C4-Alkyl.
   In Formel (III) sind R3 und R4 ebenfalls gleich oder verschieden und bedeuten H, C1-C4-Alkyl, C5-C6 -Cycloalkyl, Benzyl oder C6-C14-Aryl.
   In Formel (III) bedeuten m 1,2 oder 3 und n 1,2,3 oder 4.
   Bevorzugt ist dabei Tinuvin® 360 mit R1 = R3 = R4 = H; n = 4; R2 = 1,1,3,3-Tetramethylbutyl; m =1
d) Dimere Benzotriazol-Derivate nach Formel (IV): 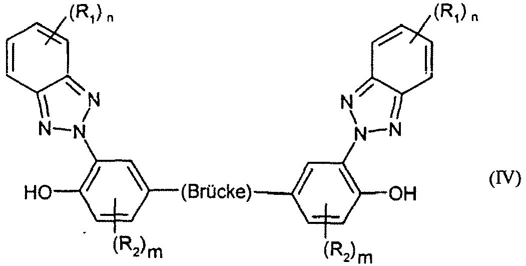 worin die Brücke 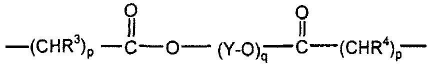 bedeutet, R , R , m und n die für Formel (III) genannte Bedeutung haben, und worin p eine ganze Zahl von O bis 3 ist, q eine ganze Zahl von 1 bis 10 ist, Y gleich -CH2-CH2-, -(CH2)3-, -(CH2)4-, - (CH2)5-, -(CH2)6-, oder CH(CH3)-CH2-ist und R3 und R4 die für Formel (III) genannte Bedeutung haben.
   Bevorzugt ist dabei Tinuvin® 840 mit R1 = H; n = 4; R2 = tert-Butyl; m = 1; R2 ist in ortho- Stellung zur OH-Gruppe angebracht; R3 = R4 = H; p = 2; Y = -(CH2)5-; q = 1
e) Triazin-Derivate nach Formel (V): 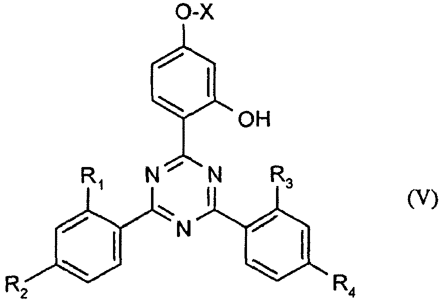 worin R1, R2, R3, R4 gleich oder verschieden sind und H, Alkyl, Aryl, CN oder Halogen sind und X gleich Alkyl, vorzugsweise iso-Octyl, ist.
   Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl
f) Triazin-Derivate der folgenden Formel (Va): 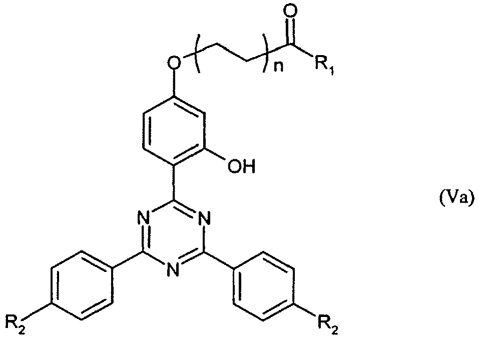 worin R1 gleich C1 Alkyl bis C17-Alkyl bedeutet, R2 gleich H oder C1-Alkyl bis C4-Alkyl bedeutet und n gleich 0 bis 20 ist.
g) Dimere Triazin-Derivate der Formel (VI): 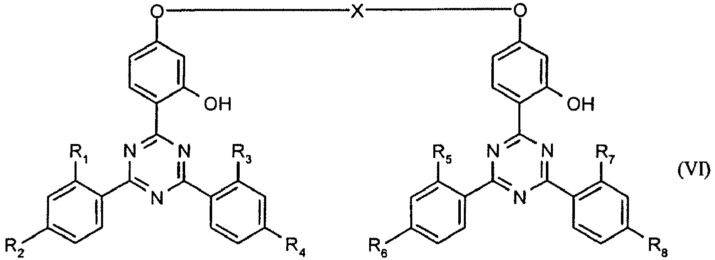 worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH2 CH2-O-)n-C(=O)-ist und n für 1 bis 10, vorzugsweise 1 bis 5, insbesondere 1 bis 3.
h) Diarylcyanoacrylate der Formel (VII): 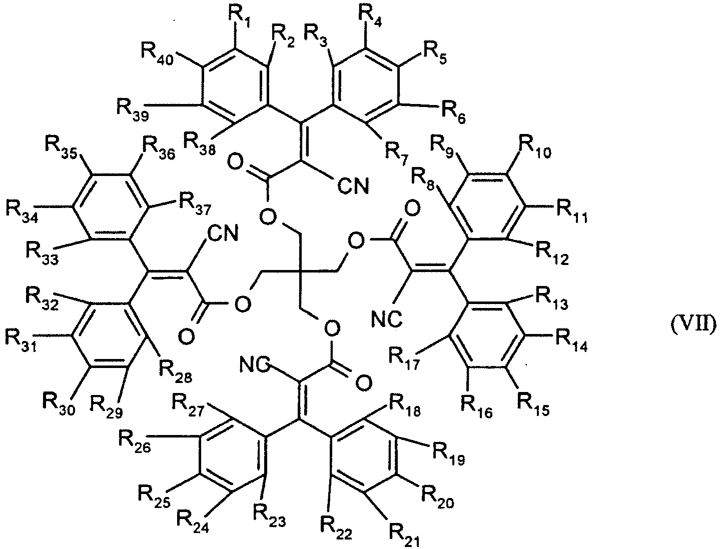 worin R bis R40 gleich oder verschieden sein können und H, Alkyl, CN oder Halogen bedeuten.

Bevorzugt ist dabei Uvinul® 3030 mit R1 bis R40 = H.

Besonders bevorzugte UV-Stabilisatoren für die erfindungsgemäßen Formmassen sind Verbindungen aus der Gruppe, die aus den Benzotriazolen (b) und dimeren Benzotriazolen (c und d), den Malonestern (a) und den Cyanacrylaten (h) sowie Mischungen dieser Verbindungen besteht.

Die UV-Stabilisatoren werden eingesetzt in Mengen von 0,01 Gew.-% bis 15,00 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Zusatzstoffe sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die Polycarbonatzusammensetzungen werden bevorzugt durch Compoundierung, beispielsweise mittels eines Mehrwellenextruders, hergestellt.

Die thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen.

Gegenstand der Erfindung sind ebenfalls Verfahren zur Herstellung der Formmassen und die Verwendung der Formmassen zur Herstellung von Formkörpern sowie die Formteile selbst.

Die Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die Polycarbonatzusammensetzungen, gegebenenfalls in Abmischung mit anderen Thermoplasten und/oder üblichen Zusatzstoffen, können zu beliebigen Formkörpern/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für den Spritzguss von größeren Formteilen, beispielsweise Autoscheiben. Durch die geringe Wasseraufnahme und der damit verbundenen verbesserten Dimensionsstabilität eignen sich aber auch besonders als Substratmaterialien für optische Datenspeicher wie z.B. CD, CD-R, DVD, DVD-R, Blu-ray Disc oder Advanced Optical Disc (AOD), sind aber auch beispielsweise als Folien im Elektrosektor, als Formteile im Fahrzeugbau, dort insbesondere für Scheinwerfer- und Lampengehäuse, für Streuscheiben und Lampenabdeckungen und als Platten für Abdeckungen im Sicherheitsbereich einsetzbar.

Bevorzugte Anwendungen für die Polycarbonate sind Spritzguß-Formkörper, Extrudate wie z.B. Platten, Folien, Profile, Halbzeuge, weiterhin Gießfolien aus hochmolekularen Polycarbonaten, sowie Zubereitungen aus Lösungen der erfindungsgemäßen Polycarbonate für Einsatzbereiche mit hohen Anforderungen an die Hoch-Temperatur-Beständigkeit der Formteile. Besonders bevorzugte Anwendungen sind solche in transparenter, translucenter oder opaker Ausführung, sowie in hellen Einfärbungen, bei denen die Eigenfarbe und die Lichtdurchlässigkeit von besonderer Bedeutung sind.

Im Rahmen der vorliegenden Erfindung sind unter ppm - soweit nichts anderes angegeben - Gewichtsteile zu verstehen.

Die nachfolgenden Beispiele sollen die Erfindung erläutern, ohne sie auf den Umfang der Beispiele einzuschränken.

### Beispiele

### Bestimmung des Schwefelgehalts:

Der Schwefelgehalt wurde durch eine dem Fachmann bekannte Chemilumineszenz-Methode bestimmt.

### Beispiele 1-3 (erfindungsgemäß)

### (Herstellung von Copolycarbonaten mit 44 Gew.-% BP-TMC und 56 Gew.-% BPA)

Die Umsetzung der Bisphenole mit Phosgen wird nach dem bekannten Phasengrenzflächenverfahren in einer Apparate-Kombination aus Umpumpreaktor und Rohrreaktor durchgeführt. Ein Umpumpreaktor besteht dabei aus einer Umpumpschleife, einer Pumpe zur Umpumpung der Reaktionsemulsion, gegebenenfalls als Mischer ausgestaltete Dosierstellen für organische Phase (Lösungsmittel enthaltend Phosgen) und wässrige Phase (Alkalilauge und Diphenolkomponente), einen Wärmeaustauscher sowie einen Verweilkessel, der parallel mit einer Entnahmemöglichkeit zur kontinuierlichen Entnahme eines Teilstromes ausgestattet ist. Ein Rohrreaktor besteht dabei aus Misch- und Verweilzeitrohren und ist hinter der Entnahmestelle des Verweilkessels dem Umpumpreaktor nachgeschaltet.

In einen Umpumpreaktor werden vor der Pumpe über ein T-Stück 10.000 kg/h einer alkalischen Lösung von Bisphenol A in verdünnter Natronlauge, die 14,9 Gew.-% BPA mit einem OH-Überschuss von 0,17 Gew.-% enthält, und 8.191 kg/h einer alkalischen Lösung von Bisphenol-TMC [1,1-Bis-(4-Hydroxyphenyl)-3,3,5-Trimethylcyclohexan] in verdünnter Natronlauge, die 14,3 Gew.-% BP-TMC mit einem OH-Überschuss von 0,22 Gew.-% enthält, dosiert. Über ein weiteres T-Stück werden 1.285 kg/h Phosgen, gelöst in 17.760 kg/h Lösungsmittel, welches aus 50 Gew.-% Methylenchlorid und 50 Gew.-% Monochlorbenzol besteht, eindosiert. Zur Aufrechterhaltung der Basizität werden an einem in Flussrichtung folgenden weiteren T-Stück 510 kg/h einer 50%-igen Natronlauge zudosiert und das Reaktionsgemisch über den Wärmetauscher und den Verweilzeitbehälter zurück zur Pumpe geleitet, wobei die o.g. Stoffströme zudosiert werden.

### Die Temperatur beträgt 38°C.

Eine Teilmenge der Emulsion, die so groß ist wie die Summe der zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 327 kg/h einer 50%-igen Natronlauge, sowie 40,1 kg/h einer Schmelze von reinem Phenol als Kettenabbrecher zudosiert. Nach einer Verweilzeit von ca. 10 Min. werden 357 kg/h einer 7 Gew.-%-igen Lösung von N-Ethylpiperidin in einem Lösungsmittelgemisch (50 Gew.-Teile Methylenchlorid und 50 Gew.-Teile Monochlorbenzol) zudosiert und die Emulsion mittels einer weiteren Pumpe durch einen weiteren Rohrreaktor gepumpt.

Nach einer Verweilzeit von weiteren 10 Min. wird die Reaktions-Emulsion in einem Trenngefäß in wässrige und organische Phase getrennt und die das Polycarbonat enthaltende organische Lösemittelphase nach bekannten Verfahren, z.B. durch Zentrifugentechnik, mit verdünnten Mineralsäuren und anschließende mit voll entsalztem Wasser elektrolytfrei gewaschen. Die Polycarbonatlösung kann nach üblichen Verfahren vom Lösemittel befreit werden. Entweder durch Sprühtrocknungsverfahren bei Verwendung von Methylenchlorid als einzigem Lösemittel oder wie hier durch Aufkonzentrieren in Eindampfanlagen und anschließender Restentgasung auf einem Ausdampfextruder. Die dort austretenden Polycarbonatschmelzestränge können entweder durch Unterwassergranulierung oder durch Stranggranulierung in die Granulatform überführt werden, aus der sie thermoplastisch verarbeitet werden.

Beispiele 1, 2 und 3 sind jeweils verschiedene Chargen des gleichen Polycarbonats.

### Beispiel 4 (erfindungsgemäß)

### (Herstellung eines Copolycarbonaten mit 67 Gew.-% BP-TMC und 33 Gew.-% BPA)

Die Umsetzung der Bisphenole mit Phosgen wird in der gleichen Anlagenkonfiguration, wie in Beispielen 1-3 beschrieben, durchgeführt.

In einen Umpumpreaktor werden vor der Pumpe über ein T-Stück 10.000 kg/h einer alkalischen Lösung von Bisphenol A in verdünnter Natronlauge, die 14,9 Gew.-% BPA mit einem OH-Überschuss von 0,17 Gew.-% enthält, und 20.991 kg/h einer alkalischen Lösung von Bisphenol-TMC [1,1-Bis-(4-Hydroxyphenyl)-3,3,5-Trimethylcyclohexan] in verdünnter Natronlauge, die 14,3 Gew.-% BP-TMC mit einem OH-Überschuss von 0,22 Gew.-% enthält, dosiert. Über ein weiteres T-Stück werden 2.077 kg/h Phosgen, gelöst in 31.380 kg/h Lösungsmittel, welches aus 50 Gew.-% Methylenchlorid und 50 Gew.-% Monochlorbenzol besteht, eindosiert. Zur Aufrechterhaltung der Alkalität werden an einem in Flussrichtung folgenden weiteren T-Stück 832 kg/h einer 50%-igen Natronlauge zudosiert und das Reaktionsgemisch über den Wärmetauscher und den Verweilzeitbehälter zurück zur Pumpe geleitet, wobei die o.g. Stoffströme zudosiert werden.

### Die Temperatur beträgt 38°C.

Eine Teilmenge der Emulsion, die so groß ist wie die Summe der zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 531 kg/h einer 50%-igen Natronlauge, sowie 61,0 kg/h einer Schmelze von reinem Phenol als Kettenabbrecher zudosiert. Nach einer Verweilzeit von ca. 10 Min. werden 651 kg/h einer 7 Gew.-%-igen Lösung von N-Ethylpiperidin in einem Lösungsmittelgemisch (50 Gew.-Teile Methylenchlorid und 50 Gew.-Teile Monochlorbenzol) zudosiert und die Emulsion mittels einer weiteren Pumpe durch einen weiteren Rohrreaktor gepumpt.

Nach einer Verweilzeit von weiteren 10 Min. wird die Reaktions-Emulsion in einem Trenngefäß in wässrige und organische Phase getrennt und die das Polycarbonat enthaltende organische Lösemittelphase wie in Beispielen 1-3 beschrieben, weiter aufgearbeitet.

### Vergleichsbeispiele 5-7

### (Herstellung von BPA-Copolycarbonaten mit 42 Gew.-% BP-TMC mit Schwefelgehalt von 1,58 ppm)

Die Herstellung dieser Copolycarbonate geschieht in gleicher Weise wie in den Beispielen 1-3 beschrieben, unter Anpassung der Mengeströme für BPA und BP-TMC.

Vergleichsbeispiele 5, 6 und 7 sind jeweils verschiedene Chargen des gleichen Polycarbonats.

### Vergleichsbeispiele 8-10

### (Herstellung von BPA-Copolycarbonaten mit 41 Gew.% BP-TMC mit Schwefelgehalt von 2,00 ppm)

Die Herstellung dieser Copolycarbonate geschieht in gleicher Weise wie in den Beispielen 1-3 beschrieben, unter Anpassung der Mengeströme für BPA und BP-TMC.

Vergleichsbeispiele 8, 9 und 10 sind jeweils verschiedene Chargen des gleichen Polycarbonats.

Die **Tabelle 1** enthält die Messergebnisse der Y.I.-Bestimmungen, sowie Zusammensetzung und Schwefelgehalt aller Beispiele:

| **Tabelle 1: Copolycarbonate aus BP-TMC und BPA** | | | | | | | | | | |
|---|---|---|---|---|---|---|---|---|---|---|
| Beispiel | 1 | 2 | 3 | 4 | 5* | 6* | 7* | 8* | 9* | 10* |
| Anteil BP-TMC [%] | 44 | 44 | 44 | 67 | 42 | 42 | 42 | 41 | 41 | 41 |
| Schwefel-Gehalt im BP-TMC [ppm] | 0,87 | 0,87 | 0,87 | 0,87 | 1,58 | 1,58 | 1,58 | 2,00 | 2,00 | 2,00 |
| YI, spritzfrisch | 1,28 | 1,28 | 1,40 | 1,34 | 3,50 | 4,00 | 3,40 | 3,70 | 3,70 | 4,40 |
| YI, 250 h bei 150°C | 3,87 | 3,15 | 5,31 | 4,24 | 8,40 | 8,80 | 7,00 | 7,40 | 9,70 | 10,40 |

| | | | | | | | | | | |
|---|---|---|---|---|---|---|---|---|---|---|
| * : Vergleichsbeispiel | | | | | | | | | | |

## Patentansprüche

1. Verfahren zur Herstellung von Polycarbonaten enthaltend Struktureinheiten der allgemeinen Formel (I): 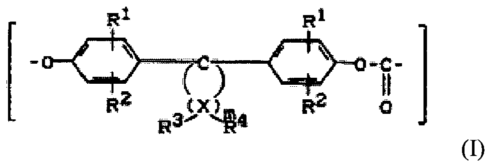 mit R¹ und R² unabhängig voneinander H, Halogen, C₁-C₈-Alkyl, C₅-C₆-Cycloalkyl, C₆-C₁₀-Aryl und C₇-C₁₂-Arylalkyl, mit m gleich 4 oder 5, mit R₃ und R₄ für jedes X frei wählbar und unabhängig voneinander H oder C₁-C₈-Alkyl, mit X gleich Kohlenstoff,
nach dem Grenzflächenverfahren oder dem Schmelzeumesterungsverfahren, **dadurch gekennzeichnet, dass** die zur Herstellung des Polycarbonats eingesetzten Bisphenole einen Schwefelgehalt von weniger als 1,5 ppm aufweisen.

2. Verfahren zur Herstellung von Polycarbonaten nach Anspruch 1, **dadurch gekennzeichnet, dass** die Polycarbonate Struktureinheiten der allgemeinen Formel (II) aufweisen, 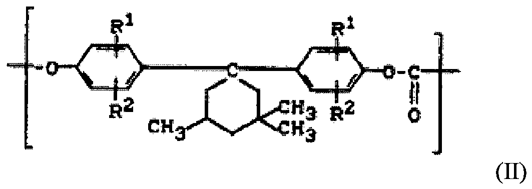 wobei R1 und R2 die für Formel (I) angegebene Bedeutung haben.

3. Verfahren zur Herstellung von Polycarbonaten nach Anspruch 1 oder 2, **dadurch gekennzeichnet, dass** die Polycarbonate zusätzlich Diphenole der Formel (III) enthalten 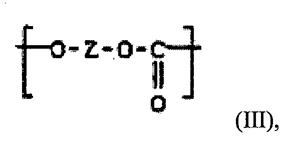 wobei Z für einen aromatischen oder alkylaromatischen Rest steht.

4. Verfahren zur Herstellung von Polycarbonaten nach einem der Ansprüche 1 bis 3, **dadurch gekennzeichnet, dass** die Polycarbonate Copolymere aus 1,1-Bis-(4-Hydroxyphenyl)-3,3,5-Trimethylcyclohexan (BPTMC) und Bisphenol A im molaren Anteil von BPTMC an der Gesamtzahl der Mole an eingesetzten Bisphenolen von 2 bis 90 Mol% BPTMC, sind.

5. Verfahren zur Herstellung von Polycarbonaten nach einem der Ansprüche 1 bis 4, **dadurch gekennzeichnet, dass** die zur Herstellung eingesetzten Bisphenole einen Schwefelgehalt von weniger als 1,0 ppm aufweisen.

## Claims

1. Process for producing polycarbonates comprising structural units of the general formula (I): 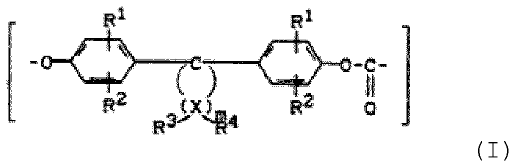 where R¹ and R², independently of one another, are H, halogen, C₁-C₈-alkyl, C₅-C₆-cycloalkyl, C₆-C₁₀-aryl and C₇-C₁₂-arylalkyl, where m is 4 or 5, where R³ and R⁴ are freely selectable for each X and, independently of one another, are H or C₁-C₈-alkyl, where X is carbon, by the interfacial process or the melt transesterification process, **characterized in that** the sulphur content of the bisphenols used to produce the polycarbonate is less than 1.5 ppm.

2. Process for producing polycarbonates according to Claim 1, **characterized in that** the polycarbonates have structural units of the general formula (II), 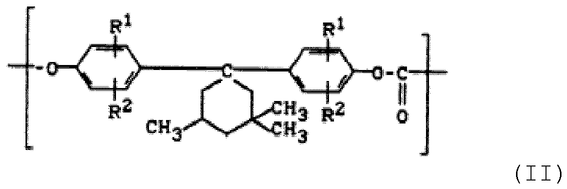 where the definition of R¹ and R² is as stated for formula (I).

3. Process for producing polycarbonates according to Claim 1 or 2, **characterized in that** the polycarbonates also comprise diphenols of the formula (III) 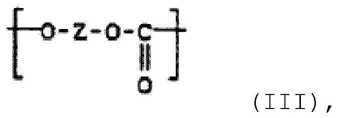 where Z is an aromatic or alkylaromatic moiety.

4. Process for producing polycarbonates according to any of Claims 1 to 3, **characterized in that** the polycarbonates are copolymers of 1,1-bis(4-hydroxyphenyl)-3,3,5-trimethylcyclohexane (BPTMC) and bisphenol A, where the molar proportion of BPTMC, based on the total molar amount of bisphenols used, is from 2 to 90 mol% of BPTMC.

5. Process for producing polycarbonates according to any of Claims 1 to 4, **characterized in that** the sulphur content of the bisphenols used for the production process is less than 1.0 ppm.

## Revendications

1. Procédé pour la préparation de polycarbonates contenant des motifs structuraux de formule générale (I) : 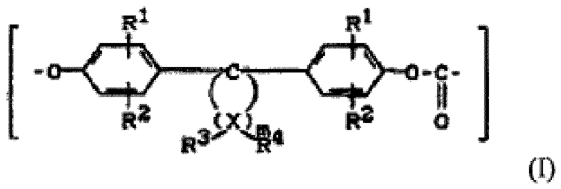 où R¹ et R² représentent indépendamment l'un de l'autre H, un atome d'halogène, un groupe alkyle en C₁-C₈, cycloalkyle en C₅-C₆, aryle en C₆-C₁₀ et arylalkyle en C₇-C₁₂, où m est égal à 4 ou 5, où R³ et R⁴ peuvent être choisis librement pour chaque X et représentent indépendamment l'un de l'autre H ou un groupe alkyle en C₁-C₈, où X est un atome de carbone,
selon le procédé en interface ou le procédé de transestérification en masse fondue, **caractérisé en ce que** les bisphénols utilisés pour la préparation du polycarbonate présentent une teneur en soufre de moins de 1,5 ppm.

2. Procédé pour la préparation de polycarbonates selon la revendication 1, **caractérisé en ce que** les polycarbonates présentent des motifs structuraux de formule générale (II), 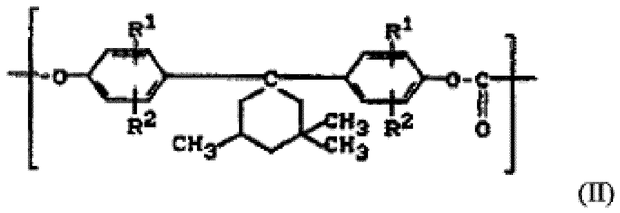 dans laquelle R¹ et R² ont la signification indiquée pour la formule (I).

3. Procédé pour la préparation de polycarbonates selon la revendication 1 ou 2, **caractérisé en ce que** les polycarbonates contiennent en outre des diphénols de formule (III) 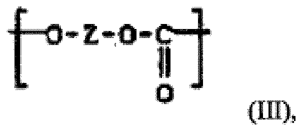 dans laquelle Z représente un radical aromatique ou alkylaromatique.

4. Procédé pour la préparation de polycarbonates selon l'une quelconque des revendications 1 à 3, **caractérisé en ce que** les polycarbonates sont des copolymères de 1,1-bis-(4-hydroxyphényl)-3,3,5-triméthylcyclohexane (BPTMC) et bisphénol A en la proportion molaire de BPTMC par rapport au nombre total des moles de bisphénols utilisés de 2 à 90 % en moles de BPTMC.

5. Procédé pour la préparation de polycarbonates selon l'une quelconque des revendications 1 à 4, **caractérisé en ce que** les bisphénols utilisés dans la préparation présentent une teneur en soufre de moins de 1,0 ppm.
